(19) Europäisches Patentamt
European Patent Office
Office européen des brevets

(11) Veröffentlichungsnummer: **0 599 105 B1**

(12) **EUROPÄISCHE PATENTSCHRIFT**

(45) Veröffentlichungstag der Patentschrift: **24.05.95**

(51) Int. Cl.$^{6}$: **C09D 11/02**

(21) Anmeldenummer: **93117789.3**

(22) Anmeldetag: **03.11.93**

# (54) Keramische Farbpaste und Druckmedium hierfür.

(30) Priorität: **27.11.92 DE 4239862**

(43) Veröffentlichungstag der Anmeldung:
**01.06.94 Patentblatt 94/22**

(45) Bekanntmachung des Hinweises auf die Patenterteilung:
**24.05.95 Patentblatt 95/21**

(84) Benannte Vertragsstaaten:
**BE DE ES FR IT LU SE**

(56) Entgegenhaltungen:
**EP-A- 0 105 994**

**DATABASE WPI WEEK 8436, DERWENT PUBLICATIONS LTD.,LONDON, GB; AN 84-223097; & JP-A-59 133 275**

**DATABASE WPI WEEK 8840, DERWENT PUBLICATIONS LTD., LONDON, GB; AN 88-281439; & JP-A-63 205 287**

**DATABASE WPI Week 8436, Derwent Publications Ltd., London, GB; AN 84-223097 & JP-A-59 133 275 (SEIKO SEISAKUSHO KK) 31. Juli 1984**

**DATABASE WPI Week 8840, Derwent Publications Ltd., London, GB; AN 88-281439 & JP-A-63 205 287 (CANON KK) 24. August 1988**

(73) Patentinhaber: **CERDEC AKTIENGESELLSCHAFT KERAMISCHE FARBEN**
**Gutleutstrasse 215**
**D-60327 Frankfurt (DE)**

(72) Erfinder: **Huber, Adalbert, Dr.**
**Lutherstrasse 76**
**D-63225 Langen (DE)**
Erfinder: **Schäfer, Silke**
**Berkersheimer Hohl 1**
**D-60435 Frankfurt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Farbpaste, insbesondere Alkydharze enthaltende Farbpaste, zur Herstellung von Dekoren auf Oberflächen aus Glas, Porzellan oder Keramik sowie ein Druckmedium zur Herstellung der Farbpaste. Die Farbpaste sowie das Druckmedium hierfür zeichnen sich durch ihre Geruchsarmut, erhöhte Lagerstabilität und verminderte Neigung zu Brennfehlern aus. Das mittels üblicher Dekorationsverfahren, wie Siebdruck- oder Abziehbild-Technik, unter Verwendung der erfindungsgemäßen Farbpaste hergestellte Dekor wird zur Fixierung in üblicher Weise eingebrannt.

Keramische Farbpasten werden zur Dekoration von keramischen Oberflächen, insbesondere solchen aus Porzellan, Keramik und Glas, eingesetzt. Das gewünschte Dekor wird unter Verwendung derartiger Farbpasten mittels üblicher Dekorationtechniken, insbesondere direkten und indirekten Druckverfahren, auf die keramische Oberfläche aufgebracht und in bekannter Weise bei Temperaturen im Bereich von meist 500 bis 1400 °C eingebrannt.

Die Paste setzt sich typischerweise zusammen aus farbgebenden anorganischen Bestandteilen, wie anorganischen Pigmenten oder Farbfritten, meist einem Glasfluß und dem Medium, das seinerseits im wesentlichen Bindemittel, Lösemittel und diverse Verarbeitungshilfsstoffe enthält. Der Glasfluß dient zur Fixierung der farbgebenden Komponenten auf der keramischen Oberfläche; mit dem Bindemittel und Lösemittel wird ein viskoses Medium hergestellt, das zusammen mit den farbgebenden Komponenten und dem Fluß eine druckfähige Paste ergibt.

Die direkte Applikation der Farbpasten erfolgt zumeist im Siebdruck; insbesondere im Automobilglasbereich sind sehr großflächige Siebe mit geringen Durchsätzen an Farbpaste in klimatisierten Räumen im Einsatz. Nach dem Druck wird das Lösungsmittel in einem Trocknungsprozeß entfernt, und anschließend kommt der so dekorierte Träger in einen Brennofen, wo organische Bestandteile der Farbpaste verbrannt und verglasende Bestandteile ausgeschmolzen werden. Die indirekte Applikation der Farbpaste erfolgt meist über Abziehbilder: Zu ihrer Herstellung wird die Farbpaste, welche in diesem Fall auch frei von einem Glasfluß sein kann (siehe z. B. GB 2 245 221 A), auf ein mit einer Trennschicht versehenes Trägermaterial, meist Papier, das hierauf bereits eine Glasfluß enthaltende Unterlageschicht aufweisen kann, bedruckt und bei Bedarf mit einer Deckschicht, etwa einem bindemittelhaltigen Film, versehen. Nach Ablösung des Trägers (durch Auflösung der Trennschicht in Wasser oder Schmelzen im Falle von Wachsen als Trennschicht) wird das Bild auf den zu dekorierenden Gegenstand übertragen und eingebrannt.

In der Praxis enthält das Druckmedium keramischer Farbpasten als Hauptbestandteil des Lösungsmittelsystem häufig Pineöle, Terpineol und andere Verbindungen auf Terpenbasis. Weitere Lösungsmittel sind Aromaten, Alkohole, chlorierte Kohlenwasserstoffe, Ketone, Ester und Leichtbenzin (siehe z. B. GB 2 245 221 A; DE-OS 25 06 820). Die Lösungsmittel auf Terpenbasis weisen eine starke Geruchsbelästigung auf, sind als reizend zu kennzeichnen und als Naturstoff oft nicht in gleicher Qualität erhältlich. Nachteile der verwendeten Aromaten sind die teilweise niedrigen MAK-Werte (=maximale Arbeitsplatzkonzentration) sowie ein zu Brennfehlern führendes schlechtes Trocknungsverhalten Glykolether sind teilweise reizend und geruchsintensiv, chlorierte Kohlenwasserstoffe aus ökotoxikologischer Sicht bedenklich; Leichtbenzine sind zwar geruchsarm, wegen ihres niedrigen Flammpunktes aber aus sicherheitstechnischer Sicht beschränkt anwendbar; Ester, Ketone und Alkohole weisen einen mehr oder minder starken Geruch auf, zudem erfüllen Sie nicht alle an sie gestellten anwendungstechnischen Erfordernisse. Die bisher in Farbpasten eingesetzten Druckmedien gestatten aufgrund der Bindemittel-Lösungsmittel-Kombination auch im Falle von Pasten für Flachglasbeschichtungen nur ein Mischungsverhältnis von keramischer Farbe (=Pigmente und Glasfluß) zu Medium von etwa 3 zu 1 , was häufig zu einem unbefriedigenden Deckvermögen führt.

In der DE-OS 25 06 820 werden Pasten, welche mit ein- oder mehrwertigen Alkoholen, höheren aliphatischen und aromatischen Kohlenwasserstoffen hergestellt wurden, wegen ihrer ungenügenden Wischfestigkeit bemängelt. Derartige Pasten enthielten aber kein Bindemittel. Das Mischungsverhältnis keramischer Farbe zu Medium wird mit 1 zu 1 bis 7 zu 3 angegeben, ist somit wenig befriedigend, sofern gut deckende Pasten gewünscht werden.

Zur Reinigung der Siebe werden bevorzugt jene Lösungsmittel eingesetzt, welche im Druckmedium enthalten sind. Dabei treten die bereits aufgezeigten Probleme auf. Besonders problematisch ist die Siebreinigung, da die Siebe zum Teil mehrere qm groß sind und es unweigerlich zu Geruchsbelästigung und Hautreizungen kommt, trotz entsprechender Schutzmaßnahmen.

Schließlich weisen keramische Farbpasten, welche Alkydharze als Bindemittel enthalten, die unangenehme Eigenschaft auf, daß sie an der Luft eine Haut bilden. Dadurch kommt es beim Siebdruck zu Problemen, erhöhtem Ausschuß an Dekoren, erhöhtem Verbrauch an Paste und erhöhtem Aufwand zur Reinigung der Siebe.

Aufgabe der Erfindung ist somit, keramische Farbpasten zur Verfügung zu stellen, welche weitgehend geruchsfrei sind und sich in arbeitshygenischer und sicherheitstechnischer Hinsicht problemlos verarbeiten lassen. Das in den Farbpasten eingesetzte Druckmedium sollte die Herstellung auch solcher siebdruckfähiger Pasten gestatten, welche einen Feststoffgehalt oberhalb 70 Gew.-%, insbesondere oberhalb 75 Gew.-%, aufweisen, um durch Reduktion der Lösungsmittelmenge die Wirtschaftlichkeit zu erhöhen und auch im Falle Glasfluß enthaltender keramischer Farbpasten stark deckende Dekore zu erzeugen. Schließlich besteht eine weitere Aufgabe darin, weitgehend geruchsfreie, Alkydharze enthaltende Farbpasten mit verminderter Neigung zur Hautbildung sowie ein hierfür geeignetes Druckmedium zur Verfügung zu stellen.

Gefunden wurde eine Farbpaste zur Herstellung von Dekoren auf Oberflächen aus Glas, Porzellan oder Keramik, enthaltend (a) ein oder mehrere farbgebende anorganische Bestandteile aus der Reihe einbrennstabiler Pigmente und Farbfritten und (b) ein Druckmedium, das in einem organischen Lösungsmittelsystem ein oder mehrere polymere organische Bindemittel klar oder gelförmig gelöst enthält, die dadurch gekennzeichnet ist, daß das Lösungsmittelsystem mindestens 50 bis 100 Gew.-% eines oder mehrerer Isoparaffine mit einem Siedepunkt im Bereich von 115 bis 300 °C, 0 bis 50 Gew.-% eines oder mehrerer solvatisierender Weichmacher und 0 bis 30 Gew.- % eines oder mehrerer Lösungsmittel aus der Reihe der Alkohole, Ether, Ester und Ketone enthält.

Vorzugsweise enthalten die erfindungsgemäßen Farbfritten einen Glasfluß, um das Dekor beim Einbrennen auf der keramischen Oberfläche des Trägers zu fixieren. Farbpasten für den Direktdruck werden in aller Regel einen Glasfluß enthalten, während ein solcher bei der Herstellung von Abziehbildern unter bestimmten Voraussetzungen, etwa jenen der GB 2 245 221 A, entfallen kann. Meist wird aber auch eine siebdruckfähige Paste im Falle der Abziehbildherstellung eine Glasfritte enthalten.

Bevorzugte Farbpasten bestehen aus einem Glasfluß farbgebenden anorganischen Bestandteilen, einem Druckmedium und üblichen Verarbeitungshilfsstoffen; das Druckmedium ist in einer Menge von 10 bis 45 Gew. -%, vorzugsweise 15 bis 25 Gew. -% und insbesondere 15 bis 20 Gew.-%, anwesend; der Anteil Verarbeitungshilfsstoffe beträgt im allgemeinen 0 bis 10 Gew.-%, meist 0 bis 5 Gew.-%. Das Gewichtsverhältnis farbgebender Komponenten zu Glasfluß liegt bei den bevorzugten Glasfluß enthaltenden Farbpasten meist im Bereich von 1 zu 10 bis 5 zu 1; Mischungsverhältnisse außerhalb dieses Bereichs sind möglich, und der Fachmann wird diese in Abhängigkeit von den gewünschten Farbeigenschaften und Gebrauchseigenschaften des dekorierten keramischen Gegenstands einstellen.

Das Lösungsmittelsystem enthält mindestens 50 Gew.-%, vorzugsweise über 70 Gew.-%, anspruchsgemäßer Isoparaffine. Isoparaffine mit einem Siedepunkt im Bereich von über 150 bis 260 °C werden bevorzugt. Üblicherweise werden synthetisch hergestellte Isoparaffingemische gleichbleibender Qualität eingesetzt. Die in den Farbpasten enthaltenen Isoparaffine sind praktisch geruchsfrei und als nicht reizend eingestuft (MAK-Wert 300 ppm) : die Ablüftzeit und Trocknungszeit sind gut einzustellen, da die Isoparaffine in den benötigten Siedebereichen erhältlich sind. Handelsübliche Isoparaffine weisen in der Regel einen Aromatengehalt unter 1 Gew.-% auf. Bekanntlich zählen Isoparaffine zu den unpolaren Lösungsmitteln mit geringem Lösevermögen für monomere Stoffe mit höherer Polarität bzw. polymere Stoffe mit hohem Anteil polarer Gruppierungen. Es war zwar bekannt (Firmenschrift TBF-03/88 der Fa. Krahn Chemie GmbH, Hamburg zu "Plioway" -Harzen von Goodyear), daß sich bestimmte Acrylharze in Isoparaffinen gelförmig lösen lassen und derartige Lösungen für geruchsarme, umweltfreundliche Farben und Lacke eingesetzt werden können, es war aber nicht vorhersehbar, daß sich derartige Isoparaffine als Hauptbestandteile des Lösungsmittelsystems des Druckmediums auch für siebdruckfähige keramische Farbpasten mit hohem, vorzugsweise über 70 Gew.-%, Feststoffgehalt einsetzen lassen.

Zur Verbesserung der Löseeigenschaften des Lösungsmittelsystems kann dieses bis zu 50 Gew.-%, vorzugsweise bis zu 30 Gew.-% und insbesondere 5 bis 20 Gew.-%, solvatisierende Weichmacher enthalten. Unter solvatisierend wird dabei verstanden, daß die Weichmacher in dem überwiegend Isoparaffine enthaltenden Lösungsmittelsystem klar löslich sind. Die gegenüber Isoparaffinen höhere Polarität der Weichmacher wirkt sich sodann positiv auf die Lösekraft des Lösungsmittelsystems gegenüber polymeren Bindemitteln aus; hierdurch wird es möglich, die Bindemittelauswahl zu erweitern und den unterschiedlichen an keramische Farbpasten gestellten anwendungstechnischen Erfordernissen gerecht zu werden. Als Weichmacher kommen Stoffe üblicher Klassen infrage, sofern sie in Isoparaffinen ausreichend löslich, chlorfrei und geruchsarm sind, beispielsweise Stoffe aus der Reihe der Phthalate, wie Diocylphthalat, Ester der $\alpha,\omega$-($C_6$-$C_{12}$)-Dicarbonsäuren, wie Adipate, Sebacate, Diisobutyrate und Phosphate, wie Tricresylphosphat. Der Fachmann wird sich durch Vorversuche ein Bild über die Eignung des beziehungsweise der Weichmacher machen; selbstverständlich dürfen sie den Ausbrennprozess nicht negativ beeinflussen.

In geringer Menge, nämlich bis zu 30 Gew.-%, vorzugsweise bis zu 10 Gew.-% und insbesondere weniger als 5 Gew.-%, können auch übliche Lösungsmittel, wie sie bei der Lack- und Farbenherstellung Einsatz finden, als Cosolventien im Lösungsmittelsystem enthalten sein. In Betracht kommen dabei Alkohole, wie z. B. Diisobutylcarbinol und Dipropylglykol, Ether, Ester, wie z. B. Glykolsäurebutylester und Milchsäureester, Ketone und aromatische und cycloaliphatische Kohlenwasserstoffe, jedoch mit der Maßgabe, daß sie zu keiner nennenswerten Erhöhung des Geruchs führen. Besonders bevorzugte Farbpasten enthalten im wesentlichen nur anspruchsgemäße Isoparaffine und Weichmacher als Bestandteile des Lösungsmittelsystems.

Das Bindemittelsystem des Druckmediums kann aus einem oder mehreren Polymeren bestehen. Eingeschlossen sind als Bindemittel auch Kombinationen aus Präpolymer und wärmehärtender Härtungskomponente, wenngleich härterfreie Polymere aus der Reihe der Polymerisate und Polykondensate bevorzugt werden. Das oder die im Druckmedium der Farbpaste einzusetzenden Bindemittel sind durch eine geringe Polarität gekennzeichnet; sie müssen derart ausgewählt sein, daß sie sich in dem Lösungsmittelsystem klar, zumindest aber gelförmig, lösen. Der Bindemittelanteil im Druckmedium liegt im allgemeinen zwischen 1 und 60 Gew.-%, meist zwischen 5 und 35 Gew.-%, insbesondere zwischen 10 und 30 Gew.-%.

Bei den Polymerisaten kann es sich um Homo- oder Copolymerisate wenig polarer Monomerer, wie ($C_3$-$C_{12}$)-Alklymethacrylat, ($C_3$-$C_{12}$)-Alkylacrylat, wie beispielsweise 2-Ethylhexylacrylat, Styrol, Vinyltoluol und 2-Ethylhexen, handeln. Vorzugsweise basieren die Homo- und Copolymerisate auf n- und iso-Butylmethacrylat sowie Propyl- und Butylacrylat als Hauptbestandteil. Polymethylmethacrylat ist ungeeignet; in Copolymerisaten darf der Anteil an Methylmethacrylat-einheiten nur gering sein. Einsetzbar sind auch gelförmig lösliche, schwach vernetzte Polymere, wie z. B. sogenannte Vinylacrylatterpolymere. Weitere Bindemittel sind Polyolefine, wie Polyisobutene, Cyclokautschukharze, Kohlenwasserstoffharze. Auch modifizierte Alkydharze sind geeignet, sofern durch Modifizierung die Polarität in der Weise reduziert ist, daß diese Harze in dem Lösungsmittelsystem löslich sind.

Es hat sich als vorteilhaft erwiesen, daß das Bindemittelsystem im wesentlichen aus den genannten Methacryl- beziehungsweise Acrylpolymeren und Copolymeren und damit verträglichen und im Lösungsmittelsystem löslichen Polymeren aus der Reihe der genannten Polyolefine, Cyclokautschukharze, Kohlenwasserstoffharze und modifizierten Alkydharze besteht. Bevorzugt werden Kombinationen aus den Acrylbeziehungsweise Methacrylpolymeren beziehungsweise -copolymeren und modifizierten Alkydharzen.

Zur Verbesserung bestimmter Eigenschaften der Farbpaste beziehungsweise des in ihr enthaltenen Druckmediums können verschiedene übliche Verarbeitungshilfsstoffe in wirksamer Menge anwesend sein. Die einzelnen Additive können im allgemeinen in einer Menge im Bereich von 0,01 bis 5 Gew.-% anwesend sein; die Gesamtmenge an diesen Stoffen wird im allgemeinen insgesamt 10 Gew.-%, vorzugsweise 5 Gew.-%, jeweils bezogen auf die Farbpaste, nicht überschreiten. Häufig anwesende Hilfsstoffe sind:
Netz- und Dispergiermittel, beispielsweise Sojalecithin; Entschäumer und Verlaufshilfsmittel, wie z. B. Siliconverbindungen; Additive zur Steuerung des rheologischen Verhaltens der Farbpaste, darunter pyrogene Kieselsäuren Bentonite, Rizinusöltypen, Polyäthylenwachse.

Modifizierte Alkydharze enthaltende keramische Farbpasten des erfindungsgemäßen Typs haben einerseits sehr gute anwendungstechnische Eigenschaften, jedoch den Nachteil, daß sich beim Stehen an der Luft eine Haut bildet. Diese Hautbildung beeinträchtigt die Lagerstabilität der Farbpaste sowie diejenige des zu ihrer Herstellung eingesetzten Druckmediums. Zusätzlich wird die Reinigung der Siebe im Falle der Anwendung einer derartigen Farbpaste mittels Siebdrucktechnik durch die Hautbildung erschwert. Es wurde gefunden, daß Ketoxime und Aldoxime, insbesondere solche mit 3 bis 6 und vorzugsweise 4 C-Atomen, also 1- und 2-Butanonoxim, in erfindungsgemäßen Farbpasten sehr wirksame Antihautbildungsmittel sind. Auch Antioxidantien, deren Wirkung auf unterschiedlichen Mechanismen beruht - siehe Polymer Degradation & Stabilisation, ed. by N. Grassie and G. Scott, Seiten 119 bis 135 -, können als Antihautbildungsmittel verwendet werden. Beispielhaft wird auf folgende Antioxydans-Stoffklassen hingewiesen:
Phosphite, wie Tris-nonylphenylphosphit; sulfidische Verbindungen, wie Thiodipropionate oder 4-Hydroxy-3,5-di-terti-butyl-phenylamino-bis-octylmercapto-s-triazin; Diphenylamine, wie N-Isopropyl-N'-phenyl-p-phenylendiamine; sterisch gehinderte Phenole, wie 3,5-Di-tert.-butyl-4-hydroxytoluol und zahlreiche andere Verbindungen mit einem oder mehreren tert.-alkylierten Phenolresten; Chelatbildner zur Metalldeaktivierung, wie Disalicydien-ethylendiamin und 2-Hydroxy-5-methyl-acetophenonoxim. Die Einsatzmenge liegt im allgemeinen im Bereich zwischen 0,005 und 2 Gew.-%, insbesondere zwischen 0,05 und 0,5 Gew.-%, jeweils bezogen auf die Farbpaste.

Obgleich das Problem der Hautbildung insbesondere in der Farbpaste auftritt, weil die in den Pigmenten und Fritten enthaltenen Schwermetalle in besonderem Maße die Autoxidation des Bindemittels katalysieren und damit zur Hautbildung führen, ist es zweckmäßig, das Antihautbildungsmittel bereits dem Druckmedium zuzusetzen. Im Hinblick auf den hohen Feststoffgehalt der Farbpaste und damit hohen Gehalt an die Hautbildung katalysierenden Schwermetallen war es nicht vorhersehbar, daß die genannten Oxime und Antioxidantien die Hautbildung über einen langen Zeitraum verhindern.

Ein weiterer Gegenstand der Erfindung richtet sich auf das Druckmedium, das zur Herstellung der oben beschriebenen alkydharzhaltigen Farbpasten geeignet ist. Das Druckmedium ist dadurch gekennzeichnet, daß das Lösungsmittelsystem im wesentlichen mindestens 50 bis 100 Gew.-% eines oder mehrerer Isoparaffine mit einem Siedepunkt im Bereich von 115 bis 300 °C, 0 bis 50 Gew.-% eines oder mehrerer solvatisierender Weichmacher und 0 bis 30 Gew.-% eines oder mehrerer Lösungsmittel aus der Reihe der Alkohole, Ether, Ester und Ketone und das Bindemittelsystem im wesentlichen ein oder mehrere modifizierte Alkydharze und ein oder mehrere Homo-und/oder Copolymerisate von im wesentlichen ($C_3$-$C_{12}$)-Alkylmethacrylaten und/oder ($C_3$-$C_{12}$)-Alkylacrylaten enthält und zusätzlich ein Mittel gegen Hautbildung aus der Reihe der Ketoxime oder Aldoxime mit 3 bis 6 C-Atomen und üblichen Antioxidantien für Polymersysteme in wirksamer Menge anwesend ist.

Als farbgebende anorganische Komponenten können die Farbpasten sogenannte Farbfritten, also gefrittete Gläser mit farbgebenden Metalloxiden und/oder der Fachwelt bekannte anorganische Pigmente, sofern sie ausreichend einbrennstabil sind, in den Farbpasten enthalten. Beispiele für Farbfritten sind insbesondere Bleiborsilikatgläser mit einem Gehalt an CuO, CoO, MnO, $Fe_2O_3$. Beispiele für Pigmente sind Oxide der Elemente Cr, Mn, Fe, Co, Ni, Cu, Cd sowie deren Mischoxide mit $Al_2O_3$, $TiO_2$, ZnO, $SnO_2$, also z. B. Spinelle und Titanate; ferner Sulfide und Selenide von Cd, insbesondere in Form von glasurstabilen Einschlußpigmenten.

Unter dem Glasfluß sind in erster Linie Glasfritten zu verstehen, welche bei der Einbrenntemperatur schmelzen. Bevorzugte Glasfritten haben einen niedrigen Schmelzpunkt im Bereich von z. B. 450 bis 800 °C. Der Schmelzpunkt und damit die Glasauswahl richtet sich nach dem zu dekorierenden Gegenstand. Üblich sind Borsilikatgläser mit einem oder mehreren Oxiden von Li, Na, K, Mg, Ca, Al, Ti, Zr, Sn, Pb, Cd, Sb, Bi. Als Glasfluß wird zusätzlich eine Kombination aus $SiO_2$ oder Silikaten und $B_2O_3$ mit einem oder mehreren der oben genannten Oxide sowie Flußmitteln, wie Fluoride, sofern unter den Einbrennbedingungen eine Glasbildung möglich ist, verstanden.

Die Herstellung der Farbpasten erfolgt in an sich bekannter Weise; zunächst wird das Druckmedium durch Auflösen des oder der Bindemittel in dem Lösungsmittelsystem oder Bestandteilen davon erzeugt; im allgemeinen erfolgt der Löseprozeß bei mäßig erhöhter Temperatur. Anschließend werden die farbgebenden Komponenten sowie der Glasfluß zugemischt und in einer Intensivmischvorrichtung, etwa einem Dreiwalzenstuhl, dispergiert und homogenisiert. Verarbeitungshilfsstoffe können direkt dem Druckmedium oder erst der Farbpaste zugesetzt werden. Sofern erforderlich, wird die Druckviskosität der Paste durch Zugabe von Bestandteilen des Lösungsmittelsystems des Druckmediums eingestellt.

Wesentlicher Vorteil der erfindungsgemäßen Farbpaste und des speziellen Druckmediums hierfür ist die Geruchsarmut und damit verbesserte Arbeitshygiene. Das die Farbpasten kennzeichnende Lösungsmittelsystem führt zu siebdruckfähigen Pasten, welche auch sehr hohe Feststoffgehalte aufweisen können. Es war nicht zu erwarten, daß Isoparaffine, also Lösungsmittel mit sehr geringer Lösekraft, in technisch hochwertigen Farbpasten als einziger oder zumindest wesentlichster Lösungsmittelbestandteil Einsatz finden können. Zusätzlich wurde in erfindungsgemäßen alkydharzhaltigen Farbpasten das lange bestehende Problem der Hautbildung gelöst, indem wirksame Mittel gegen die Hautbildung aufgefunden wurden.

Erfindungsgemäße Farbpasten und vorzugsweise solche mit mindestens einem Mittel gegen Hautbildung enthaltende Farbpasten weisen zusätzlich den besonderen Vorteil auf, daß die kritische Pigment-Volumen-Konzentration sehr hoch und damit die Gesamtporosität

$$( = 1 - \frac{CPVC}{PVC},$$

wobei CPVC für die kritische Pigment-Volumenkonzentration und PVC für die Pigment-Volumenkonzentration stehen - siehe Paint Flow and Pigment Dispersion ed. Temple C. Patton, 2nd. ed. 19.., Seite 126-129) nach dem Trocken sehr niedrig ist. Damit lassen sich Brennfehler weitgehend vermeiden.

Die Erfindung wird durch die folgenden Beispiele verdeutlicht.

**Beispiele 1 bis 10**

Die Zusammensetzung von Druckmedien für Farbpasten folgt aus der Tabelle 1. Zur Herstellung der Medien werden die Rohstoffe gemischt und in einem Dispergiergerät (Dissolver) in 20 Minuten ohne Kühlung gelöst.

Tabelle 1: Druckmedium für Farbpasten (Zusammensetzung in Gew.-%)

| Beispiel Nr. | 1 | 2 | 3 | 4 | 5 |
|---|---|---|---|---|---|
| **Lösungsmittelsystem:** | | | | | |
| - Isoparaffin Typ / Gew.-% 1) | M / 73 | M / 70 | L / 72 | M / 67 | J / 67 |
| - Weichmacher Typ / Gew.-% 2) | | | | DOP / 6 | DOP / 6 |
| **Bindemittelsystem:** | | | | | |
| - Acrylharz Typ / Gew.-% 3) | EC1 / 15 | PQ610 / 18 | EC1 / 18 | EC1 / 15 | EC1 / 15 |
| - Alkydharz Typ / Gew.-% 4) | AL810 / 12 | AL810 / 12 | AL810 / 10 | AL810 / 10 | AL810 / 10 |
| **Verarbeitungshilfsstoffe:** | | | | | |
| - Entschäumer 5) Gew.-% | | | | 1 | 1 |
| - Dispergiermittel 6) Gew.-% | | | | 1 | 1 |

1) Isopar® / Exxon Chemical Typ L: Siedebereich 190-207 °C; Typ J: 182-208 °C; Typ M: 205-255 °C
2) DOP = Dioctylphthalat; DBS = Dibutylsebacat
3) Plioway® / Goodyear, Typ EC-1 und EC-T sind Terpolymere aus i-Butylmethacrylat, Vinyltoluol und 2-Ethylhexylacrylat
Plexiqum® / Röhm, Typ PQ 610 basiert auf Butylmethacrylat
4) Alftalat / Hoechst AG, Typ AL 810
5) Tegoflow 700 / Tegochemie, Essen
6) Hypermer LP 8 / ICI: Polyhydroxyfettsäureamid

Fortsetzung zu Tabelle 1:

| 5 | 6 | 7 | 8 | 9 | 10 |
|---|---|---|---|---|---|
| J / 67 | M / 48 | M / 67 | M / 58 | M / 72 | M / 61 |
| DOP / 6 | DOP / 10 | DBS / 6 | DOP / 15 | DOP / 6 | DOP / 10 |
| EC1 / 15 | EC1 / 30 | EC1 / 15 | ECT / 15 | PQ610 / 20 | EC1 / 27 |
| AL810 / 10 | AL810 / 10 | AL810 / 10 | AL810 / 10 | - | - |
| 1 | 1 | 1 | 1 | 1 | 1 |
| 1 | 1 | 1 | 1 | 1 | 1 |

**Beispiel 11**

Durch Zugabe von 1 g Methylethylketonoxim zu 100 g des Druckmediums gemäß Beispiel 4 wird die Hautbildung des Druckmediums und insbesondere der daraus hergestellten Farbpaste mit einem Feststoffgehalt an Dekorfarbe von 83 Gew.-% bei der in einem geschlossenen Gefäß mit Luftschicht über mehr als 2 Wochen vermieden.

**Beispiele 12 bis 15**

Die Dekorfarbe (Typ 14215, Degussa AG) , bestehend aus einem schwarzen Pigment auf der Basis eines Cr/Cu/Fe-Oxids und einer Bleiborsilikatfritte, wird mit einem Medium und einem Antihautbildungsmittel (Antioxidans) gemischt und dispergiert, woraus die Farbpasten resultieren (Tabelle).

Tabelle 2

| Farbpasten (Zusammensetzung in Gew.-%) | | | | |
|---|---|---|---|---|
| Beispiel Nr. | Dekorfarbe (%) | Medium Typ gemäß Beispiel Nr. | (%) | Antihautbildungsmittel *) |
| 12 | 83,3 | 4 | 15,7 | 1 |
| 13 | 58,7 | 6 | 40,3 | 1 |
| 14 | 78,1 | 8 | 20,9 | 1 |
| 15 | 84,3 | 7 | 14,7 | 1 |
| 16 | 74,3 | 10 | 25,7 | 1 |

*) Eingesetzt wurde ein handelsübliches Autioxydans auf der Basis sterisch gehinderter Phenole.

Soweit erforderlich, wird die Druckviskosität durch Zugabe von Isoparaffin (Isopar M) eingestellt. Die Farbpasten sind fast geruchlos, bilden auch über mehrere Wochen keine Haut und weisen ein hohes Deckvermögen des Dekors auf.

**Patentansprüche**

**1.** Farbpaste zur Herstellung von Dekoren auf Oberflächen aus Glas, Porzellan oder Keramik, enthaltend (a) ein oder mehrere farbgebende anorganische Bestandteile aus der Reihe einbrennstabiler Pigmente und Farbfritten und (b) ein Druckmedium, das in einem organischen Lösungsmittelsystem ein polymeres organisches Bindemittelsystem klar oder gelförmig gelöst enthält,
dadurch gekennzeichnet,
daß das Lösungsmittelsystem im wesentlichen mindestens 50 bis 100 Gew.-% eines oder mehrerer Isoparaffine mit einem Siedepunkt im Bereich von 115 bis 300 °C, 0 bis 50 Gew.-% eines oder mehrerer solvatisierender Weichmacher und 0 bis 30 Gew.-% eines oder mehrerer Lösungsmittel aus der Reihe der Alkohole, Ether, Ester und Ketone enthält.

**2.** Farbpaste nach Anspruch 1,
dadurch gekennzeichnet,
daß sie zusätzlich einen Glasfluß, vorzugsweise eine oder mehrere Glasfritten, enthält.

**3.** Farbpaste nach Anspruch 1 oder 2,
dadurch gekennzeichnet,
daß sie aus einem Glasfluß, farbgebenden anorganischen Bestandteilen, einem Druckmedium und üblichen Verarbeitungshilfsstoffen besteht, wobei das Druckmedium in einer Menge von 10 bis 40 Gew.-%, vorzugsweise 15 bis 25 Gew.-%, und Verarbeitungshilfsstoffe in einer Menge von insgesamt 0 bis 10 Gew.-% anwesend sind.

**4.** Farbpaste nach einem der Ansprüche 1 bis 3,
dadurch gekennzeichnet,
daß das Lösungsmittelsystem aus über 70 Gew.-% Isoparaffinen mit einem Siedepunkt im Bereich von über 150 bis 250 °C und 0 bis 30 Gew.-% solvatisierenden Weichmachern besteht.

**5.** Farbpaste nach einem der Ansprüche 1 bis 4,
dadurch gekennzeichnet,
daß das Bindemittelsystem aus einem oder mehreren miteinander verträglichen und im Lösungsmittelsystem klar oder gelförmig löslichen Polymeren aus der Reihe der Homo-und Copolymerisate von ($C_3$-$C_{12}$)-Alkylmethacrylaten, ($C_3$-$C_{12}$)-Alkylacrylaten, Styrol, Vinyltoluol, Vinylacrylat, 2-Ethylhexen, sowie Polyolefine, wie Polybuten, Cyclokautschuk, Kohlenwasserstoffharze und modifizierte Alkydharze besteht.

6. Farbpaste nach Anspruch 5,
dadurch gekennzeichnet,
daß das Bindemittelsystem im wesentlichen ein oder mehrere modifizierte Alkydharze und ein oder mehrere Homo- und/oder Copolymerisate von im wesentlichen ($C_3$-$C_{12}$)-Alkylmethacrylaten, und/oder ($C_3$-$C_{12}$)-Alkylacrylaten enthält und zusätzlich ein Mittel gegen Hautbildung aus der Reihe der Aldoxime oder Ketoxime mit 3 bis 6 C-Atomen und üblichen Antioxidantien für Polymersysteme in wirksamer Menge anwesend ist.

7. Druckmedium zur Herstellung einer Farbpaste gemäß Anspruch 1 bis 6, enthaltend ein in einem organischen Lösungsmittelsystem klar oder gelförmig gelöstes polymeres organisches Bindemittelsystem,
dadurch gekennzeichnet,
daß das Lösungsmittelsystem im wesentlichen aus mindestens 50 bis 100 Gew.-% eines oder mehrerer Isoparaffine mit einem Siedepunkt im Bereich von 115 bis 300 °C, 0 bis 50 Gew.-% eines oder mehrerer solvatisierender Weichmacher und 0 bis 30 Gew.-% eines oder mehrerer Lösungsmittel aus der Reihe der Alkohole, Ether, Ester und Ketone besteht und das Bindemittelsystem im wesentlichen ein oder mehrere modifizierte Alkydharze und ein oder mehrere Homo-und/oder Copolymerisate von im wesentlichen ($C_3$-$C_{12}$)-Alkylmethacrylaten und/oder ($C_3$-$C_{12}$)-Alkylacrylaten enthält und zusätzlich ein Mittel gegen Hautbildung aus der Reihe Ketoxime oder Aldoxime mit 3 bis 6 C-Atomen und üblichen Antioxydantien für Polymersysteme in wirksamer Menge anwesend ist.

## Claims

1. Dye paste for producing designs on surfaces of glass, porcelain or ceramics, containing (a) one or more chromophore inorganic components selected from the series comprising pigments and coloured frits which are stable on baking and (b) a printing medium which contains a polymer organic binder system dissolved in clear or gel form in an organic solvent system, characterized in that the solvent system substantially contains at least 50 to 100 weight % of one or more isoparaffins with a boiling point in the range of 115 to 300 °C, 0 to 50 weight % of one or more solvating softeners and 0 to 30 weight % of one or more solvents selected from the series comprising alcohols, ethers, esters and ketones.

2. Dye paste according to Claim 1, characterized in that it additionally contains a glass flux, preferably one or more glass frits.

3. Dye paste according to Claim 1 or 2, characterized in that it consists of a glass flux, chromophore inorganic components, a printing medium and conventional preparative adjuvants, the printing medium being present in an amount of 10 to 40 weight %, preferably 15 to 25 weight %, and preparative adjuvants being present in an amount of 0 to 10 weight % in total.

4. Dye paste according to any one of Claims 1 to 3, characterized in that the solvent system consists of more than 70 weight % of isoparaffins with a boiling point in the range of above 150 to 250 °C and 0 to 30 weight % of solvating softeners.

5. Dye paste according to any one of Claims 1 to 4, characterized in that the binder system consists of one or more polymers which are compatible with one another, are soluble in clear or gel form in the solvent system and are selected from the series comprising homo and copolymers of ($C_3$-$C_{12}$) alkylmethacrylates, ($C_3$-$C_{12}$) alkylacrylates, styrene, vinyltoluene, vinylacrylate, 2-ethylhexene, as well as polyolefins, such as polybutene, cyclorubber, hydrocarbon resins and modified alkyd resins.

6. Dye paste according to Claim 5, characterized in that the binder system substantially contains one or more modified alkyd resins and one or more homo and/or copolymers of substantially ($C_3$-$C_{12}$) alkylmethacrylates and/or ($C_3$-$C_{12}$) alkylacrylates and additionally an agent preventing the formation of skin which is selected from the series comprising aldoximes or ketoximes with 3 to 6 carbon atoms and conventional antioxidants for polymer systems is present in an effective amount.

7. Printing medium for producing a dye paste according to Claims 1 to 6, containing a polymer organic binder system which is dissolved in clear or gel form in an organic solvent system, characterized in that the solvent system consists substantially of at least 50 to 100 weight % of one or more isoparaffins with a boiling point in the range of 115 to 300 °C, 0 to 50 weight % of one or more solvating softeners and 0 to 30 weight % of one or more solvents selected from the series comprising alcohols, ethers, esters and ketones and the binder system substantially contains one or more modified alkyd resins and one or more homo and/or copolymers of substantially ($C_3$-$C_{12}$) alkylmethacrylates and/or ($C_3$-$C_{12}$) alkylacrylates and additionally an agent preventing the formation of skin which is selected from the series comprising ketoximes or aldoximes with 3 to 6 carbon atoms and conventional antioxidants for polymer systems is present in an effective amount.

**Revendications**

1. Pâtes de couleur pour la préparation de décorations sur des surface de verre, de porcelaine ou de céramique, contenant :
   a) un ou plusieurs composants chormophores minéraux de la série des pigments et frittes colorés stables à la cuisson et,
   b) un support d'impression, qui dans un système de solvants organiques contient en clair ou formant un gel un ou plusieurs liants organiques polymères, qui sont caractérisés en ce que le système de solvants contient au moins 50 à 100 % en poids d'une ou plusieurs isoparaffines ayant un point d'ébullition se situant dans la plage de 115 à 300 °C, 0 à 50 % en poids d'un ou de plusieurs plastifiants solvatants et 0 à 30 % en poids d'un ou de plusieurs solvants de la série des alcools, éthers, esters et cétones.

2. Pâte de couleur selon la revendication 1, caractérisée en ce qu'elle contient en supplément une vitrification, de préférence une ou plusieurs frittes de verre.

3. Pâte de verre selon la revendication 1 ou la revendication 2, caractérisée en ce qu'elle se compose d'une vitrification, de composants minéraux chromophores, d'un support d'impression et d'adjuvants de traitement, le support d'impression étant présent en une quantité de 10 à 40 % en poids, de préférence de 15 à 25 % en poids, et les adjuvants de traitement en une quantité au total de 0 à 10 % en poids.

4. Pâte de couleur selon une des revendications 1 à 3, caractérisée en ce que le système de solvants se compose de plus de 70 % en poids d'isoparaffines ayant un point d'ébullition dans la gamme au-delà de 150 à 250 °C et de 0 à 30 % en poids de plastifiants solvants.

5. Pâte de couleur selon une des revendications 1 à 4, caractérisée en ce que le système de liants se compose d'un ou plusieurs polymères compatibles ensemble et solubles dans le système de solvants de manière claire ou sous forme de gel, polymères de la série des homo- et copolymères de méthacrylates d'alkyle en ($C_3$-$C_{12}$), d'acrylates d'alkyle en ($C_3$-$C_{12}$) du styrène, du toluène vinylique, de l'acrylate vinylique, du 2-éthylhexène, ainsi que de polyoléfines, comme du polybutène, du cyclocaoutchouc, des résines d'hydrocarbures et des résines d'alkyde modifiées.

6. Pâte de couleur selon la revendication 5, caractérisée en ce que le système de liants contient essentiellement un ou plusieurs homo et/ou copolymères essentiellement de méthacrylates d'alkyle en ($C_3$-$C_{12}$), et/ou d'acrylates d'alkyle en ($C_3$-$C_{12}$) et additionnellement est présent en quantité efficace un agent contre la formation de croûte de la série des aldoximes ou cétoximes ayant de 3 à 6 atomes de carbone et des antioxydants usuels pour des systèmes polymères.

7. Support d'impression pour la préparation d'une pâte de couleur selon les revendications 1 à 6, contenant un système de liants organiques polymères dissous en clair ou sous forme de gel dans un système de solvants organiques, caractérisé en ce que le système de solvant se compose essentiellement d'au moins 50 à 100 % en poids d'une ou plusieurs isoparaffines ayant un point d'ébullition dans la gamme de 115 à 300 °C, de 0 à 50 % en poids d'un ou plusieurs plastifiants solvatants et de 0 à 30 % en poids d'un ou plusieurs solvants de la série des alcools, éthers, esters et cétones et le système de liants contient essentiellement une ou plusieurs résines d'alkyde modifiées et un ou plusieurs homo et/ou copolymères essentiellement de méthacrylates d'alkyle en ($C_3$-$C_{12}$) et/ou d'acrylates d'alkyle en ($C_3$-$C_{12}$) et additionnellement un agent contre la formation de croûte de la série des cétoximes ou aldoximes ayant de 3 à 6 atomes de C et des antioxydants usuels pour des systèmes polymères sont présent en quantité efficace.